(19) Europäisches Patentamt
European Patent Office
Office européen des brevets

(11) **EP 3 559 480 B1**

(12) **EUROPÄISCHE PATENTSCHRIFT**

(45) Veröffentlichungstag und Bekanntmachung des Hinweises auf die Patenterteilung:
**29.03.2023 Patentblatt 2023/13**

(21) Anmeldenummer: **17837939.2**

(22) Anmeldetag: **15.12.2017**

(51) Internationale Patentklassifikation (IPC):
**F15B 15/14** (2006.01) **F16J 15/04** (2006.01)
**F16J 1/00** (2006.01) **F16J 10/02** (2006.01)

(52) Gemeinsame Patentklassifikation (CPC):
**F15B 15/1442; F16J 1/008; F16J 10/02; F16J 15/04**

(86) Internationale Anmeldenummer:
**PCT/DE2017/000424**

(87) Internationale Veröffentlichungsnummer:
**WO 2018/113810 (28.06.2018 Gazette 2018/26)**

(54) **SCHRAUBARBEITSZYLINDER**

THREADED WORK CYLINDER

VÉRIN FILETÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2016 DE 202016007691 U**

(43) Veröffentlichungstag der Anmeldung:
**30.10.2019 Patentblatt 2019/44**

(73) Patentinhaber: **Bümach Engineering International B.V.**
**7826 TA Emmen (NL)**

(72) Erfinder: **BUETER, Josef**
**49733 Haren/Altenberge (DE)**

(74) Vertreter: **Weihrauch, Frank**
**Dr. Weihrauch & Haussingen**
**Patent- und Rechtsanwälte**
**W.-Seelenbinder-Straße 17**
**98529 Suhl (DE)**

(56) Entgegenhaltungen:
EP-A1- 1 571 379       DE-A1- 1 675 299
DE-U- 1 906 301       GB-A- 735 660
JP-U- S55 140 806       JP-U- 551 408 06U

**Beschreibung**

Die Erfindung betrifft einen als Schraubzylinder ausgebildeten druckmittelbetriebenen Arbeitszylinder.

Aus dem Stand der Technik sind Schraubarbeitszylinder verschiedener Bauarten, insbesondere in Form hydraulischer oder pneumatischer Schraubarbeitszylinder, bekannt. Diese weisen ein Zylinderrohr sowie zumindest ein Verschlussteil auf, wobei das Zylinderrohr und das Verschlussteil zur Montage des Schraubarbeitszylinders miteinander verschraubt werden. Als weitere Bestandteile eines gattungsgemäßen Schraubarbeitszylinders liegen zumindest eine Kolbeneinheit, in der Regel als Kolbenstange mit einem mit der Kolbenstange verbundenen Kolben, vor.

Zur Gewährleistung der notwendigen Betriebssicherheit ist es unter anderem erforderlich, den Schraubarbeitszylinder gegenüber der Außenatmosphäre abzudichten. Ein Lösungsansatz ist diesbezüglich aus der Druckschrift DE 35 17 137 A1 bekannt. Hierbei wird ein Arbeitszylinder beschrieben, bei welchem im Bereich der Verschraubung des Zylinderrohrs und des Verschlussteils eine elastische Dichtung eingebracht ist. Die an der Stirnseite des Verschlussteils angeordnete Dichtung wird bei einem Anziehen der Verschraubung zusätzlich in einen Wirkeingriff mit der Kolbenstange überführt.

Des Weiteren ist auch aus der Druckschrift DE 1 921 843 U ein druckmittelbetriebener Arbeitszylinder bekannt, dessen Zylinderrohr beidseitig mit Verschlussteilen verschraubt ist. Zur Gewährleistung einer druckdichten Verschraubung sind hierbei jeweils zusätzliche Ringdichtungen im Bereich der Kopplung vorhanden.

Die aus den vorgenannten Druckschriften aus dem Stand der Technik bekannten Lösungen zur Abdichtung eines Schraubarbeitszylinders gegenüber der Außenatmosphäre basieren somit auf der Einlagerung von elastischen Dichtelementen. Aus EP 0 880 652 ist eine Lösung ohne notwendige elastische Dichtelemente bekannt. Hier wird an dem Zylinderrohr und an dem Verschlussteil eine kraftschlüssige Paarung in Form eines Konus ausgebildet. Die Herstellung erfordert höchste Präzision bei der Fertigung der Dichtflächen und deren oberflächigen Rauhheitswerten. Der Konus ermöglicht eine axiale Gleitbewegung der Kopplungspartner um die infolge der Wirkung unterschiedlicher axialer Kräfte bei unterschiedlichen Betriebsdrücken aufkommende axiale Verschiebung zu ermöglichen.

Aus der DE1906301U ist ein Hydraulikzylinder bekannt, welcher zur Abdichtung eine Stopfbuchse und eingesetzte Zylinderbleche nutzt.

Die Aufgabe der Erfindung ist es daher, einen Schraubarbeitszylinder bereitzustellen, welcher zur zuverlässigen Abdichtung gegenüber der Umgebung keine zusätzlichen Dichtelemente erfordert und welcher eine hohe Betriebssicherheit aufweist sowie besonders einfach und kostengünstig herstellbar ist.

Die Aufgabe wird durch die im Patentanspruch 1 aufgeführten Merkmale gelöst.

Eine bevorzugte Weiterbildung ergibt sich aus dem Unteranspruch.

Ein erfindungsgemäßer Schraubarbeitszylinder weist ein Zylinderrohr, ein Verschlussteil sowie eine Kolbeneinheit auf und liegt vorzugsweise als hydraulischer oder pneumatischer Schraubarbeitszylinder vor.

Zylinderrohr und Verschlussteil werden nachfolgend auch zusammengefasst als Kopplungspartner bezeichnet.

Das Zylinderrohr weist einen Endbereich mit einem ersten Gewinde auf, wobei der Endbereich auf der dem Verschlussteil zugewandten Seite des Zylinderrohrs angeordnet ist. Das Zylinderrohr ist als Hohlzylinder ausgebildet, wobei die Kolbeneinheit in dem inneren Hohlraum des Zylinderrohrs aufgenommen ist. Die Kolbeneinheit setzt sich je nach Ausführung aus zumindest einem Kolben sowie zumindest einer Kolbenstange zusammen, wobei Kolben und Kolbenstange zur Ausbildung der Kolbeneinheit miteinander verbunden als einteiliges Bauelement ausgebildet sein können. Es können auch besondere Ausbildungen der Kolbeneinheit vorliegen, beispielsweise wie als Tauchkolben im Fall der Ausbildung des Schraubarbeitszylinders als Plungerzylinder.

Das Verschlussteil weist ein zweites Gewinde auf und ist in einer Montageendlage mittels des zweiten Gewindes mit dem ersten Gewinde des Zylinderrohrs verschraubt. Vorzugsweise handelt es sich daher bei dem ersten Gewinde um ein Innengewinde und bei dem zweiten Gewinde um ein Außengewinde, in diesem Fall ist das Verschlussteil in das Zylinderrohr eingeschraubt. Jedoch ist auch eine umgekehrte Ausbildung möglich, so dass das Zylinderrohr in diesem Fall in das Verschlussteil eingeschraubt ist.

Die vorliegende Erfindung bezieht sich auf Schraubarbeitszylinder mit mindestens einem geschraubten Verschlussteil. Dabei ist die Erfindung nicht auf Schraubarbeitszylinder mit nur einem Verschlussteils beschränkt. Ebenso kann bei einem Schraubarbeitszylinder mit zwei geschraubten Verschlussteilen, wie beispielsweise bei einem Differenzialarbeitszylinder mit einem Bodenverschlussteil und einem Führungsverschlussteil, jedes der beiden Verschlussteile mit den erfindungsgemäßen Merkmalen mit dem Zylinderrohr gekoppelt sein. Zudem ist es im Falle zweier Verschlussteile möglich, dass eines der beidseitig vorhandenen Verschlussteile andersartig, insbesondere mittels einer Schweißverbindung, mit dem Zylinderrohr verbunden ist, so dass dann lediglich das jeweils andere Verschlussteil mit dem Zylinderrohr erfindungsgemäß gekoppelt ist.

Der erfindungsgemäße Schraubarbeitszylinder ist so ausgebildet, dass der Endbereich des Zylinderrohrs einen Wandungsverjüngungsabschnitt aufweist. Der Wandungsverjüngungsabschnitt liegt hierbei als ein Teil des Endbereichs vor, wobei das Zylinderrohr in dem Wandungsverjüngungsabschnitt eine geringere Wandungsstärke als im übrigen Bereich aufweist.

Dabei weist der Wandungsverjüngungsabschnitt eine axiale Ringfläche und das Verschlussteil eine axiale Gegenringfläche auf, welche in der Montageendlage in einem formschlüssigen Druckkontakt zueinander stehen. Der formschlüssige Druckkontakt wird somit durch die Erzeugung einer axialen Kraft aufgrund des Verschraubens von Zylinderrohr und Verschlussteil bewirkt. Dabei wird in dem Bereich, wo sich axiale Ringfläche und Gegenringfläche gegenüberliegen, eine Druckkontaktfläche ausgebildet, die zugleich eine durchgängige Dichtebene bereitstellt. Entlang der Dichtebene wird eine Abdichtung des Schraubarbeitszylinders gegenüber der Umgebung bewirkt.

In Folge des Druckkontakts zwischen der Ringfläche und der Gegenringfläche resultiert an der Druckkontaktfläche eine Flächenpressung. Durch diese Flächenpressung wird wiederum eine Verformung des Zylinderrohrs, insbesondere dessen Wandungsverjüngungsabschnitts, sowie des Verschlussteils bewirkt. Erfindungsgemäß liegt die stattfindende Verformung sowohl ohne Druckbeaufschlagung als auch mit einer Druckbeaufschlagung eines Druckmediums innerhalb einer Elastizitätsgrenze. Die Elastizitätsgrenze wird dabei durch die Werkstoffe des Zylinderrohrs und des Verschlussteils bestimmt. Für den Fall, dass Zylinderrohr und Verschlussteil aus verschiedenen Werkstoffen bestehen, sind entsprechend auch verschiedene Elastizitätsgrenzen zu berücksichtigen.

Bei einer hohen Druckbeaufschlagung kommt es zu erheblichen innenseitig auf das Verschlussteil axial wirkenden Kräften. Dies bewirkt eine geringe axiale Lageveränderung des Verschlussteils. Bei Entfall der Druckbeaufschlagung findet die geringe axiale Lageänderung dann in umgekehrter Richtung statt. Die axiale Lageveränderung wirkt sich auf den Grad der Verformung der Kopplungspartner in den an die Druckkontaktfläche angrenzenden Bereichen aus. Bei hoher Druckbeaufschlagung ist die Verformung somit geringer als bei geringerer Druckbeaufschlagung. Zugleich ist die Flächenpressung bei hoher Druckbeaufschlagung geringer als bei geringerer Druckbeaufschlagung.

Da die stattfindende Verformung erfindungsgemäß in allen Druckbeaufschlagungszuständen ausschließlich auf den elastischen Bereich beschränkt ist, ist diese bei einer Änderung des Betriebszustandes durch Druckbeaufschlagung und Entfall der Druckbeaufschlagung vollständig reversibel. Dabei wird erfindungsgemäß zugleich für sämtliche Betriebszustände gewährleistet, dass der Druckkontakt und die bewirkte Flächenpressung der Druckkontaktfläche die Ausbildung der Dichtebene und somit eine ausreichende Abdichtung des Schraubarbeitszylinders gegenüber der Außenatmosphäre sicherstellen.

Der Begriff Druckbeaufschlagung umfasst hierbei den gesamten Wertebereich von einem beliebigen Kleinstdruck bis zu einem maximal zulässigen Druck des Arbeitsmediums. Auch bei dem maximalen Druck verbleibt eine ausreichende axiale Kraft auf die dichtende Druckkontaktfläche, so dass die Funktion des Arbeitszylinders erhalten bleibt.

Wesentliche Vorteile des hier aufgezeigten Schraubarbeitszylinders gegenüber herkömmlichen Kopplungslösungen bestehen in Folgendem:
Die zwischen den Kopplungspartnern wirkende axialen Gesamtkraft setzt sich zusammen aus der axialen Kraft, die infolge der Druckbeaufschlagung durch das Arbeitsmedium auf das Verschlussteil wirkt und der axialen Kraft die erforderlich ist, um eine ausreichende Flächenpressung an der Druckkontaktfläche zu bewirken. Die axiale Gesamtkraft muss über das Gewinde der Kopplungspartner bereitgestellt werden.

Aufgrund der bestehenden Zusammenhänge zwischen Flächenpressung, Elastizitätsgrenze und Wandungsstärke des Zylinderrohrs wird durch die verringerte Wandungsstärke im Bereich des Wandungsverjüngungsabschnitts und damit verringerten axialen Ringfläche erreicht, dass die Druckkontaktfläche mit geringeren axialen Kräften beaufschlagt werden muss um eine für eine elastische Verformung ausreichende Flächenpressung und damit eine elastische Verformung zu erzeugen. Damit wird durch die Erfindung die axiale Gesamtkraft die auf das Gewinde wirkt, reduziert.

Aufgrund der geringeren axialen Gesamtkraft ist lediglich eine verringerte Gewindelänge erforderlich. Dies ermöglicht geringere Bauteilabmessungen der Kopplungspartner mit erheblichen Materialeinsparungen.

Ferner muss ein lediglich geringeres Anzugsdrehmoment bei der Verschraubung bei der Montage der Kopplungspartner aufgebracht werden. Die ermöglicht Kosteneinsparungen durch geringer dimensionierte Montagevorrichtungen sowie einen geringeren erforderlichen Energieeinsatz.

Des Weiteren ist es insbesondere vorteilhaft, dass die auftretenden Verformungen des Zylinderrohrs und des Verschlussteils erfindungsgemäß ausschließlich auf den elastischen Bereich beschränkt sind und somit vollständig reversibel sind. Daher ist der Schraubarbeitszylinder langfristig verwendbar, ohne dass die Funktionsfähigkeit eingeschränkt wird. Da das Zylinderrohr sowie das Verschlussteil stets auf die ursprüngliche Ausgangsform zurückgehen, können die auftretenden Kräfte und die an der Druckkontaktfläche vorliegende Flächenpressung stets erneut in gleichem Maße sichergestellt werden.

Vorteilhaft ist es zudem, dass die axiale Ringfläche des Wandungsverjüngungsabschnitts des Zylinderrohres und die axiale Gegenringfläche des Verschlussteils auch bei den unterschliedlichen Druckbeaufschlagungen keine Relativbewegungen zueinander ausführen.

Ein weiterer Vorteil besteht in der konstruktiven und technologischen Einfachheit.

Die Wandungsverjüngung, axiale Ringfläche und Gegenringfläche können in kostengünstiger Zerspanungsfertigung hergestellt werden. Damit ist auch der Vorteil einer einfachen Fertigung verbunden.

Ein Vorteil besteht zudem darin, dass keine zusätzlichen Dichtelemente zur Abdichtung gegenüber der Außenatmosphäre erforderlich sind, was die Kosten reduziert und die Montage vereinfacht.

Durch die nicht erforderlichen elastomeren Dichtelemente besteht als weiterer Vorteil eine Einsatzmöglichkeit im höheren Temperaturbereich.

Ein weiterer Vorteil besteht darin dass die erfindungsgemäße Lösung es nicht ausschließt, für spezielle Einsatzfälle zusätzliche elastische Dichtungen, vorzugsweise in einer Nut des Verschlussteils, vorzusehen. Das Dichtelement stellt dann dabei eine zusätzliche Sicherungsmaßnahme dar.

Erfindungsgemäß beträgt die Wandungsstärke des Wandungsverjüngungsabschnitts höchstens 60 % der Wandungsstärke des Zylinderrohres. Hierdurch wird sichergestellt, dass sich bei allen üblichen Betriebsdrücken eine Verformung nur innerhalb der Elastizitätsgrenze einstellt und eine Dichtigkeit gewährleistet ist. Mittels der geringen Wandungsstärke des Wandungsverjüngungsabschnitts wird für eine ausreichende Flächenpressung eine geringere axiale Kraft benötigt als bei einer Fläche, die sich bei der Wandungsstärke des übrigen Zylinderrohres ergeben würde. Weiter beträgt die Wandungsstärke des Wandungsverjüngungsabschnitts zudem mindestens 20 % der Wandungsstärke des Zylinderrohres. Ferner beträgt die Länge des Wandungsverjüngungsabschnitts mindestens das Einfache der jeweiligen Wandungsstärke des Wandungsverjüngungsabschnitts. Eine sich so ergebende Geometrie des Wandungsverjüngungsabschnitts ist besonders vorteilhaft.

Gemäß einer nächsten vorteilhaften Weiterbildung weist das Verschlussteil ein zusätzliches Dichtelement auf, welches vorzugsweise als ringförmige elastische Dichtung ausgeführt ist und in eine Nut des Verschlussteils eingelassen ist. Das Dichtelement stellt dabei eine zusätzliche Sicherungsmaßnahme zur Gewährleistung einer vollständigen Abdichtung des Schraubarbeitszylinders gegenüber der Außenatmosphäre dar.

Die Erfindung wird als Ausführungsbeispiel anhand von

Fig. 1    Gesamtansicht des Schraubarbeitszylinders in Schnittdarstellung,

Fig. 2    Detailansicht des Schraubarbeitszylinders in Schnittdarstellung näher erläutert.

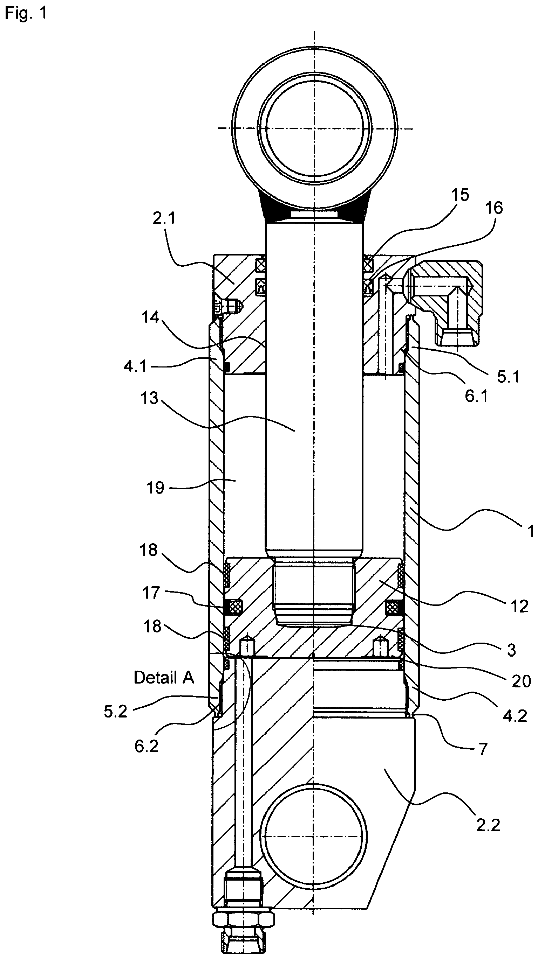

Fig. 1 zeigt eine Gesamtansicht eines Ausführungsbeispiels des erfindungsgemäßen Schraubarbeitszylinders. Das Zylinderrohr 1 ist hierbei mit einem Führungsverschlussteil 2.1 sowie mit einem Bodenverschlussteil 2.2 verschraubt, wobei das Zylinderrohr 1 beidseitig jeweils ein als Innengewinde ausgeführtes erstes Gewinde 5.1 und 5.2 aufweist und die beiden Verschlussteile 2.1 und 2.2 jeweils ein als Außengewinde ausgeführtes zweites Gewinde 6.1 und 6.2 aufweisen. Die ersten Gewinde 5.1 und 5.2 sind beidseitig in den Endbereichen 4 des Zylinderrohrs angeordnet.

Des Weiteren ist in dem Zylinderrohr 1 eine Kolbeneinheit 3 aufgenommen, welche sich im Ausführungsbeispiel aus einer Kolbenstange 13 und einem mit der Kolbenstange 13 verbundenen Kolben 12 zusammensetzt. Um ein Ausfahren der Kolbenstange 13 im Rahmen einer Hubbewegung zu ermöglichen, weist das Führungsverschlussteil 2.1 eine Bohrung als axiale Durchsetzung mit einer Verschlussteilinnenwandung 14 auf.

An der Verschlussteilinnenwandung 14 des Führungsverschlussteils 2.1 sind ein Abstreifer 15 sowie eine Kolbenstangendichtung 16 angeordnet. Der Abstreifer 15 dient insbesondere zur Entfernung von Verschmutzungen der Kolbenstange 13. Die Kolbenstangendichtung 16 gewährleistet eine Abdichtung des Kolbenstangenraums gegenüber der Außenatmosphäre.

Der Kolben 12 trennt den Kolbenstangenraum 19 und den Kolbenraum 20. Kolbenstangenraum 19 und Kolbenraum 20 werden zusammengefasst auch als die Arbeitsräume bezeichnet. Gemäß der dargestellten Ausführungsform des Schraubarbeitszylinders ist zudem eine Kolbendichtung 17 vorgesehen. Mittels der Kolbendichtung 17 wird eine Abdichtung der Arbeitsräume erzielt und somit ein unerwünschtes Übertreten des Druckmediums zwischen den Arbeitsräumen verhindert. Zur linearen Führung des Kolbens 12 sind an diesem zwei Führungsbänder 18 angeordnet, welche zugleich den direkten, metallischen Kontakt mit dem Zylinderrohr 1 verhindern.

Nachfolgend wird die Kopplung des Zylinderrohrs 1 mit dem Bodenverschlussteil 2.2 näher erläutert. Der beschriebene Aufbau und die hieran erläuterten funktionalen Zusammenhänge treffen in gleicher Weise auch auf die Kopplung zwischen dem Zylinderrohr 1 und dem Führungsverschlussteil 2.1 zu.

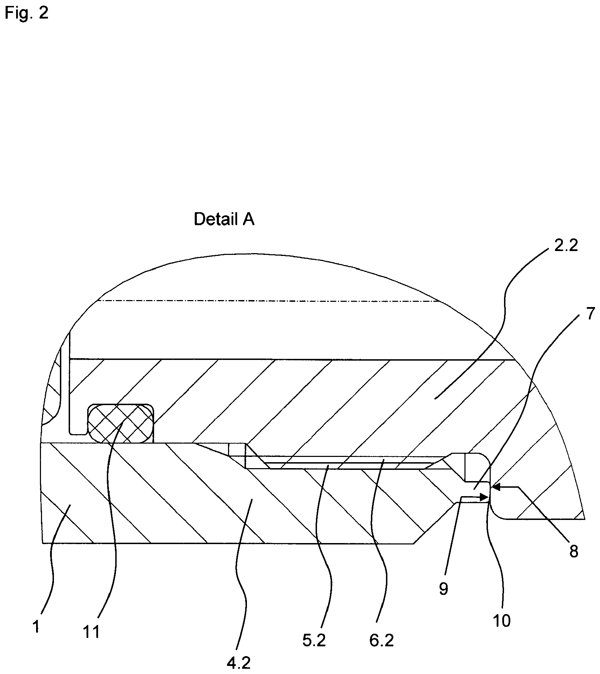

Wie insbesondere Fig. 2 in einer vergrößerten Ansicht des Details A in Fig. 1 zeigt, weist der Endbereich 4 des Zylinderrohrs 1 einen Wandungsverjüngungsabschnitt 7 auf. Der Wandungsverjüngungsabschnitt 7 weist gegenüber den übrigen Bereichen des Zylinderrohrs 1 eine geringere Wandungsstärke auf. Im Ausführungsbeispiel beträgt die Wandungsstärke des Wandungsverjüngungsabschnitts 7 etwa 42% der Wandungsstärke des übrigen Zylinderrohrs 1.

Der Wandungsverjüngungsabschnitt 7 weist eine axiale Ringfläche 8 auf, während das hierbei dargestellte Bodenverschlussteil 2.2 eine axiale Gegenringfläche 9 aufweist. In der Montageendlage, in welcher Zylinderrohr 1 und Bodenverschlussteil 2.2 miteinander verschraubt sind, stehen die axiale Ringfläche 8 und die axiale Gegenringfläche 9 in einem formschlüssigen Druckkontakt zueinander. Somit wird eine Druckkontaktfläche 10 ausgebildet, welche als Dichtebene wirkt. Die Dichtebene ist so ausgebildet, dass entlang der gesamten Druckkontaktfläche 10 eine durchgängige Abdichtung gegenüber der Außenatmosphäre gewährleistet wird.

Durch ein Anziehen der Verschraubung wird in der Montageendlage eine Flächenpressung im Bereich der Druckkontaktfläche 10 bewirkt, welche eine axiale Verformung sowohl des Zylinderrohrs 1 als auch des Bodenverschlussteils 2.2 zur Folge hat. Die mit der Flächenpressung einhergehende Belastung des Zylinderrohrs 1, insbesondere des Wandungsverjüngungsabschnitts 7, und des Bodenverschlussteils 2.2 ist so eingestellt, dass die Verformung in sämtlichen Betriebszuständen, also mit oder ohne Druckbeaufschlagung des Druckmediums innerhalb der Elastizitätsgrenzen der verwendeten Werkstoffe verbleibt. Es findet die Verformung der Kopplungspartner bei wechselnden Betriebsdrücken ausschließlich im elastischen Bereich statt. Da der Schraubarbeitszylinder nicht von irreversiblen plastischen Verformungen in seiner Funktionsfähigkeit eingeschränkt wird, ist dieser langfristig verwendbar und weist eine geringere Störanfälligkeit auf.

Wie Fig. 2 darüberhinaus zeigt, ist im Ausführungsbeispiel im Bodenverschlussteil 2.2 zusätzlich ein Dichtelement 11 vorgesehen, welches hierbei als ringförmige elastische Dichtung ausgeführt ist, welches lediglich als zusätzliche Sicherungsmaßnahme für spezielle Anwendungsfälle Verwendung findet.

Einige der erzielten Vorteile werden nachfolgend anhand des Ausführungsbeispiels mathematisch nachgewiesen, wobei für die zugrunde liegenden Kenngrö-ßen praxisnahe Werte herangezogen wurden.

Als Berechnungsgrundlage wurde sowohl für das Zylinderrohr 1 als auch für die Verschlussteile 2.1 und 2.2 als Werkstoff die Stahlsorte S355 N gewählt, welche eine Elastizitätsgrenze $R_{0,2}$, auch bezeichnet als 0,2%-Dehngrenze, in Höhe von 355 N/mm$^2$ aufweist.

Der Durchmesser $D_K$ des Kolbens 12 wurde im vorliegenden Beispiel auf 75 mm festgelegt. Die Wandungsstärke $s$ des Zylinderrohrs 1 beträgt 6 mm, während die reduzierte Wandungsstärke $a$ im Bereich des Wandungsverjüngungsabschnitts 7 2,5 mm beträgt.

Für die Berechnung der auf die Ringflächen 8; 9 einwirkenden Kräfte gelten die folgenden mathematischen Beziehungen:

$$F_{red} = (D_K + s) * \pi * a * R_{0,2} = (75 + 6) * \pi * 2,5 * 355 = 225.841 \text{ N}$$

$$F_{max} = (D_K + s) * \pi * s * R_{0,2} = (75 + 6) * \pi * 6 * 355 = 542.019 \text{ N}$$

Hierbei bezeichnet $F_{red}$ die erforderliche Krafteinwirkung bei Verwendung einer reduzierten Wandungsstärke von 2,5 mm und $F_{max}$ die erforderliche Kraft ohne Verwendung eines Wandungsverjüngungsabschnitts 7 bei einer somit vorliegenden Wandungsstärke von 6 mm. Als Resultat ergibt sich eine reduzierte Kraft $F_{red}$ von 225.841 N sowie eine maximale Kraft $F_{max}$ von 542.019 N.

Somit wäre bei einer entlang des gesamten Zylinderrohrs 1 konstanten Wandungsstärke von 6 mm eine in etwa 2,4-fache Krafteinwirkung erforderlich, um in gleichem Maße in den elastischen Bereich des Werkstoffs zu gelangen, wie dies bei der Verwendung eines Wandungsverjüngungsabschnitts 7 mit einer Wanddicke von 2,5 mm der Fall ist.

Aufgrund der geringeren Kraft $F_{red}$, welche bei Nutzung eines erfindungsgemäßen Schraubarbeitszylinders zur Erzielung der zur Abdichtung benötigten Flächenpressung erforderlich ist, kann beispielsweise eine reduzierte Gewindelänge $l_{red}$ angewandt werden.

$$l_{red} = \frac{F_{red} * P}{d_G * \pi * H * p_{zul}} = \frac{225.841 * 1,5}{77,026 * \pi * 0,812 * 177,5} = 9,71 \, mm$$

Hierbei bezeichnet $P$ die Steigung des Gewindes, $d_G$ den Flankendurchmesser des Gewindes, $p_{zul}$ die zulässige Flankenpressung für das Gewinde und $H$ die Gewindetiefe als projezierte Flanke des Gewindes. Die zulässige Flankenpressung $p_{zul}$ ergibt sich dabei gemäß:

$$p_{zul} = R_{0,2} * 0,5 = 355 * 0,5 = 177,5 \, N/mm^2$$

Für die nicht reduzierte axiale Ringfläche 8 ergibt sich gemäß einer analogen Rechnung die Gewindelänge $l_{max}$:

$$l_{max} = \frac{F_{red} * P}{d_G * \pi * 0,812 * p_{zul}} = \frac{542.019 * 1,5}{77,026 * \pi * 0,812 * 177,5} = 23,31 \, mm$$

Die Differenz zwischen den Gewindelängen $l_{max}$ und $l_{red}$ ergibt sich somit zu 13,6 mm. Die erzielte Einsparung der Gewindelänge reduziert den Materialeinsatz, die Baugröße und ferner die Fertigungszeit des Schraubarbeitszylinders.

Daneben ergeben sich auch energetische Einsparungen bei der Montage und Fertigung des Schraubarbeitszylinders. Die anschließende Berechnung verdeutlicht dies anhand der Berechnung der Drehmomente $M_{red}$ bei einer Kraft in Höhe von $F_{red}$ sowie $M_{max}$ bei einer Kraft in Höhe von $F_{max}$:

$$M_{red} = F_{red} * d_G * 0,5 * \tan(\alpha + \varrho) = 225.841 * 77,026 * 0,5 * \tan(0,36° + 2,86°)$$

$$M_{red} = 489.329 \ Nmm \approx 490 \ Nm$$

$$M_{max} = F_{max} * d_G * 0,5 * \tan(\alpha + \varrho) = 542.019 * 77,026 * 0,5 * \tan(0,36° + 2,86°)$$

$$M_{max} = 1.174.391 \ Nmm \approx 1175 \ Nm$$

Hierbei bezeichnet $\alpha$ den Steigungswinkel des Gewindes und $\varrho$ (Rho) den Reibungswinkel gemäß der Formel $\tan(\varrho) = 0,05$.

Die Differenz von $M_{red}$ gegenüber $M_{max}$ kennzeichnet die erzielte Einsparung des erforderlichen Drehmoments bei der Montage des Schraubarbeitszylinders. Zusätzlich ergibt sich eine entsprechende energetische und zeitliche Einsparung im Fertigungsprozess.

Verwendete Bezugszeichen

| 1 | Zylinderrohr |
|---|---|
| 2.1 | Führungsverschlussteil |
| 2.2 | Bodenverschlussteil |
| 3 | Kolbeneinheit |
| 4 | Endbereich |
| 5 | erstes Gewinde |
| 6 | zweites Gewinde |
| 7 | Wandungsverjüngungsabschnitt |
| 8 | axiale Ringfläche |
| 9 | axiale Gegenringfläche |
| 10 | Druckkontaktfläche |
| 11 | Dichtelement |
| 12 | Kolben |
| 13 | Kolbenstange |
| 14 | Verschlussteilinnenwandung |
| 15 | Abstreifer |
| 16 | Kolbenstangendichtung |
| 17 | Kolbendichtung |
| 18 | Führungsband |
| 19 | Kolbenstangenraum |
| 20 | Kolbenraum |

**Patentansprüche**

**1.** Schraubarbeitszylinder,

aufweisend ein Zylinderrohr (1), ein Verschlussteil (2) sowie eine Kolbeneinheit (3),
wobei das Zylinderrohr (1) einen Endbereich (4) aufweist, wobei das Zylinderrohr (1) in dem Endbereich (4) ein erstes Gewinde (5) aufweist und wobei in dem Zylinderrohr (1) die Kolbeneinheit (3) aufgenommen ist, wobei das Verschlussteil (2) ein zweites Gewinde (6) aufweist und wobei das Verschlussteil (2) in einer Montageendlage mittels des zweiten Gewindes (6) mit dem ersten Gewinde (5) des Zylinderrohrs (1) verschraubt ist, wobei der Endbereich (4) des Zylinderrohrs (1) einen Wandungsverjüngungsabschnitt (7) aufweist, wobei der Wandungsverjüngungsabschnitt (7) axial distal zu dem ersten Gewinde (5) angeordnet ist und gegenüber den übrigen Bereichen des Zylinderrohrs (1) eine geringere Wandungsstärke aufweist, wobei die geringere Wandungsstärke zwischen 20% und 60% der Wandungsstärke des Zylinderrohrs (1) beträgt und eine Länge des Wandungsverjüngungsabschnitts (7) mindestens das Einfache der Wandungsstärke des Wandungsverjüngungsabschnitts (7) beträgt, wobei der Wandungsverjüngungsabschnitt (7) eine axiale Ringfläche (8) aufweist und wobei das Verschlussteil (2) eine axiale Gegenringfläche (9) aufweist und wobei die axiale Ringfläche (8) und die axiale Gegenringfläche (9) in der Montageendlage in einem formschlüssigen Druckkontakt zueinander stehen und eine Druckkontaktfläche (10) ausbilden, wobei die Druckkontaktfläche (10) eine Dichtebene ausbildet, wobei durch eine Flächenpressung im Bereich der Druckkontaktfläche (10) eine Verformung des Zylinderrohrs (1) und des Verschlussteils (2) bewirkt wird, wobei der Schraubarbeitszylinder angepasst ist, dass die Verformung sowohl ohne als auch mit einer Druckbeaufschlagung eines Druckmediums innerhalb einer Elastizitätsgrenze vorliegt.

**2.** Schraubarbeitszylinder nach Anspruch 1 oder 2,
**dadurch gekennzeichnet,**
**dass** das Verschlussteil (2) zusätzlich ein Dichtelement (11) aufweist.


## Claims

**1.** A screw-threaded working cylinder,

comprising a tubular cylinder (1), a closure (2) and a piston unit (3),
wherein the tubular cylinder (1) has an end region (4), wherein the tubular cylinder (1) has a first thread (5) in the end region (4) and wherein the piston unit (3) is accommodated in the tubular cylinder (1), wherein the closure (2) has a second thread (6), and wherein the closure (2) is screwed by the second thread (6) with the first thread (5) of the tubular cylinder (1) in a final mounting position,
wherein
the end region (4) of the tubular cylinder (1) has a tapered wall section (7), wherein the tapered wall section (7) is arranged in an axially distal position with respect to the first thread (5) and has a reduced wall thickness compared to the other regions of the tubular cylinder (1), wherein the reduced wall thickness is between 20% and 60% of the wall thickness of the tubular cylinder (1) and a length of the tapered wall section (7) is at least one times the wall thickness of the tapered wall section (7), wherein the tapered wall section (7) has an axial annular surface (8) and wherein
the closure (2) has a mating axial annular surface (9) and wherein
the axial annular surface (8) and the mating axial annular surface (9) are pressed in a positive fitting contact to each other in the final mounting position and form a pressure contact surface (10), wherein the pressure contact surface (10) forms a sealing plane, wherein a surface pressure in the area of the pressure contact surface (10) causes a deformation of the tubular cylinder (1) and the closure (2), wherein the screw-threaded working cylinder is adjusted such that deformation occurs both without and with pressure application by a pressure medium within an elastic limit.

**2.** The screw-threaded working cylinder according to claim 1,
**characterized in**
**that** the closure (2) is additionally provided with a sealing element (11).


## Revendications

**1.** Cylindre de travail fileté,

comprenant un tube cylindrique (1), un élément de fermeture (2) ainsi qu'une unité piston (3),
le tube cylindrique (1) comprenant une zone d'extrémité (4), le tube cylindrique (1) comprenant un premier filetage (5) dans la zone d'extrémité (4) et l'unité piston (3) étant logée dans le tube cylindrique (1),

l'élément de fermeture (2) comprenant un deuxième filetage (6) et l'élément de fermeture (2) étant, dans une position finale de montage, vissé dans le premier filetage (5) du tube cylindrique (1) au moyen du deuxième filetage (6), dans lequel la zone d'extrémité (4) du tube cylindrique (1) présente une partie à paroi rétrécie (7), la partie à paroi rétrécie (7) étant disposée axialement de manière distale par rapport au premier filetage (5) et présentant une épaisseur de paroi inférieure par rapport aux autres zones du tube cylindrique (1), dans lequel l'épaisseur de paroi réduite est comprise entre 20% et 60% de l'épaisseur de paroi du tube cylindrique (1) et une longueur de la partie à paroi rétrécie (7) est au moins égale à une fois l'épaisseur de paroi de la partie à paroi rétrécie (7), dans lequel la partie à paroi rétrécie (7) présente une surface annulaire axiale (8) et dans lequel l'élément de fermeture (2) présente une surface annulaire opposée axiale (9) et dans lequel la surface annulaire axiale (8) et la surface annulaire opposée axiale (9) sont en contact de pression par complémentarité de forme l'une avec l'autre dans la position finale de montage et forment une surface de contact de pression (10), la surface de contact par pression (10) formant un plan d'étanchéité, une déformation du tube de cylindre (1) et de l'élément de fermeture (2) étant provoqué par une pression de surface dans la zone de la surface de contact par pression (10), le cylindre de travail fileté étant adapté de telle sorte que la déformation se situe à l'intérieur d'une limite d'élasticité aussi bien sans qu'avec une application de pression d'un fluide sous pression.

2. Cylindre de travail fileté suivant les revendications 1 ou 2
   est **caractérisé en ce**
   **que** l'élément d'obturation (2) comprend en plus un élément d'étanchéité (11).

Fig. 1

Fig. 2

Detail A

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3517137 A1
- DE 1921843 U
- EP 0880652 A
- DE 1906301 U